(19) Europäisches Patentamt
European Patent Office
Office européen des brevets

(11) Publication number: **0 237 557**
**B1**

(12) # EUROPEAN PATENT SPECIFICATION

(45) Date of publication of patent specification: **28.03.90**

(51) Int. Cl.$^5$: **G 02 B 6/34**

(21) Application number: **86905873.5**

(22) Date of filing: **23.09.86**

(86) International application number: **PCT/GB 86/00571**

(87) International publication number: **WO/87018 (26.03.87 Gazettee 87/07)**

(54) **FIBRE OPTIC ASSEMBLY.**

(30) Priority: **23.09.85 GB 8523407**

(43) Date of publication of application: **23.09.87 Bulletin 87/39**

(45) Publication of the grant of the patent: **28.03.90 Bulletin 90/13**

(84) Designated contracting states: **AT BE CH DE FR IT LI LU NL SE**

(56) References cited:
EP-A- 0 115 443
EP-A- 0 121 962
EP-A- 0 157 529
GB-A- 2 096 350

(73) Proprietor: **PLESSEY OVERSEAS LIMITED**
**Vicarage Lane**
**Ilford Essex IG1 4AQ (GB)**

(72) Inventor: **PENDLETON-HUGHES, Simon, Mark**
**68 Rhuddlan Road, Rhyl**
**Clwyd (GB)**
Inventor: **CARTER, Andrew, Cannon**
**32A Stoke Road**
**Blifworth N73 DZ (GB)**

(74) Representative: **Fish, Norman Ernest**
**The Plessey Company plc Intellectual Property**
**Department Vicarage Lane**
**Ilford Essex IG1 4AQ (GB)**

**EP 0 237 557 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

## Description

The present invention concerns improvements in or relating to fibre-optic tapping assemblages for use in wavelength-multiplexed fibre-optic systems. The function to facilitate the selective insertion and/or removal of one or more signal wavelength bands from a fibre-optic link carrying many wavelength multiplexed bands.

Conventional tapping assemblages utilise two discrete tapping components (tap-in and tap-out), usually arranged in series, for each wavelength accessed. In such assemblages, therefore, the component-count is high and connector losses considerable. Furthermore, band-pass and band-stop types of filter are usual in the assemblages. These are most often complicated and costly.

The present invention is intended to provide a remedy to the shortcomings aforesaid.

EP-A-115443 discloses an optical fibre demultiplexer comprising first and second ports located in the focal plane of a first spherical reflective surface such that light at one port is focused on the other. A second spherical reflective surface which is dichroic is located between the ports and the first spherical surface and has a focal plane common with that of the first spherical surface. A third port is located in the common focal plane such that light from the first port of the frequency reflected by the dichroic surface is focused at the third port.

GB-A-2096350 discloses a coupling device comprising input and output optical fibres coupled to one face of a graded refractive index rod collimating lens. Associated with the other face of the lens are a plurality of multi-layer dielectric interference filters which selectively reflect the input signals at different angles according to the wavelength and thereby direct them back through the lens to the appropriate output fibre. The illustrated device operates as a multiplexer/demultiplexer, coupling optical signals having distinct wavelengths between respective fibres and a common multiplex-signal fibre.

In accordance with a first aspect of this invention, therefore, there is provided a tapping device for a wavelength multiplexed fibre optic system, the device comprising an array of optical fibres, a lens member for collimating light from and/or focussing light upon an end face of the optical fibres, and a group of wavelength selective filters (F1-F5), wherein one of the fibres provides a multiplexed link input port, another of the fibres provides a multiplexed link output port, and a least a further pair of fibres provide, respectively, an input tap and an output tap, characterised in that the filters are mirror filters which are arranged in wavelength sequential order and are angularly inclined for coupling light of appropriate select wavelength between said ports and taps in that the device further comprises, for each signal wavelength accessable by the device, an input tap and an output tap, and a wavelength selective mirror filter for each accessable wavelength, each such filter being angularly inclined for coupling light between the input port and the corresponding output tap and between the corresponding input tap and the output port ; in that further filters angularly inclined for coupling light between the input port and the output port, for reflecting light at wavelengths below, above, and intermediate to said accessable wavelengths, are provided ; and in that the or each fibre pair comprising the input port and the output tap, and the or each pair comprising the input tap and the output port are arranged substantially orthogonal to each other, each pair being coupled by a common mirror filter.

In carrying out the present invention, the array may comprise a closely packed bundle of monomode or multimode optical fibres conveniently contained within a tubular housing (e. g. a glass capillary tube) of appropriate bore dimensions for holding the optical fibres in position.

The lens member conveniently may comprise a rod-shaped graded refractive index (GRIN) lens which serves the dual function of collimating light received from the optical fibre array and of focusing light reflected back from the wavelength-selective filter group on to selected end faces of the optical fibre array. This, or a conventional rod lens, is conductive with simple mechanical alignment.

The array of closely packed optical fibres and use also of a closely stacked group of wavelength-selective filters in combination with the preferred use of a rod-like GRIN lens, enables a relatively simple, compact device of relatively low cost and ease of manufacture to be produced, having relatively low losses for the following reasons :

a) Low off-axis lens aberrations due to the use of a closely packed optical fibre array ;

b) Discrete wavelength-selective filters are used ;

c) Low lens aberrations due to minimal amount of collimating and focusing carried out for a given number of channels ;

d) Minimal number of optical components ; and,

e) Short optical path lengths.

The mirror filter group may be comprised of long-wave pass filters and thus of relatively straightforward construction and low cost.

In accordance with a second aspect of the invention there is provided a fibre optic tapping assemblage, the assemblage comprising a tapping device as aforesaid, and including at least one signal source connected to an input tap, for inserting a first signal of a predetermined wavelength, and at least one signal receiving means connected to an output tap receptive to a second signal of a predetermined wavelength, for removing said second signal from the assemblage.

Advantageously, given appropriate selection and arrangement of the fibres and the filters, said first

and second signals may be of a common select wavelength lying within the operational wavelength range of the assemblage and system. Signals of common wavelength may be inserted and removed. Alternatively, however, it is noted that the first and second signals may be of different channel wavelength.

The invention affords wavelength selective access on and off a fibre-optic link capable of carrying many wavelengths and noteably incorporates but a single coupling component, the tapping device above mentioned. When compared with state-of-art assemblages which require two discrete components for each wavelength channel accessed, it can be seen that optical and connector losses are much reduced as many sources for such losses have been eliminated.

In accordance with a further aspect of the invention there is provided a wavelength-multiplexed fibre-optic system comprising in co-operative combination the tapping device or assemblage aforesaid together with at least one multiplexer/demultiplexer component, each incorporating a fibre array and lens member of corresponding identical construction.

In the drawings accompanying this specification :

Figure 1 is a schematic illustration showing a tapping assemblage configured in accordance with the invention ;

Figure 2 is an enlarged and simplified elevational view of a tapping device, part of the assemblage, illustrated in the preceding figure ;

Figure 3 is an end view of a fibre array, part of this device, and shows fibre and signal wavelength designation ;

Figure 4 is an illustration of a reflection mapping function for one of the device mirror filters ; and,

Figure 5 is a schematic representation of a simple wavelength-multiplexed fibre-optic system incorporating as essential part the assemblage shown in the preceding figures.

So that this invention may be better understood, embodiments thereof will now be described, by way of example only, and with particular reference to the drawings aforesaid.

With reference first to figure 1 there is shown in schematic, a tapping assemblage wherein signals S in a number of wavelength channels $\lambda_1 ... \lambda_a ... \lambda_b ... \lambda_n$ are propogated along a main fibre link to an input port 1 of a tapping device T. One pair of optical fibres, 2 and 3 respectively, provide input and output taps for signals S*, S of one selected wavelength $\lambda_a$. A further pair of optical fibres 5 and 6 provide another set of input and output taps for signals S*, S of a longer wavelength $\lambda_b$. A signal source — e. g. an input coupler or transmitter (e. g. light-emitting diode) TX, is connected to each input tap, 2 and 6 and, a receiver — e. g. an output coupler or light detector, RX, is connected to each output tap 3 and 5.

The tapping device T of the particular assemblage considered here comprises an array of seven optical fibres, the fibres 1 to 7 just discussed. These are arranged as a circle of six fibres 1 to 6 about a centrally located fibre 7, the whole having an hexagonal close-packed configuration (fig. 3). It is noted, however, that other packing configurations may be employed. It will be especially noted that pairs of fibres are disposed to lie in orthogonal planes — e. g. the pair consisting of fibres 1 and 3 is orthogonal to the pair consisting of fibres 2 and 7. It is thus possible, using only a single mirror, to couple light between the tap-in fibre 2 and link-out fibre 7 whilst simultaneously providing coupling between the tap-out fibre 3 and the link-in fibre 1, (fig. 4) thus conserving reflection and transmission losses.

The more detailed structure of the tapping device T is shown in Figure 2. The close-packed arrayed of fibres 1 to 7 is contained within the core of a glass capillary tube and ferrule A. The end faces of these fibres 1 to 7 are coplanar and the array is located on or close and near parallel to the optical axis of a graded refractive index lens B. The end faces of the fibres 1 to 7 are located at or close to the focal plane of the lens B so that light emerging from the fibres 1 to 7 will be collimated. Adjacent to the end of the lens B remote from the fibres is an assembly of five wavelength-selective mirror filters F1 to F5. These mirror filters are, for present purposes, of the long-wave pass type and are arranged in a sequential order of increasing wavelength. It is to be noted, however, that other types of filter are not precluded — for example short wave pass type filters may be utilised but arranged in order of decreasing wavelength. Each of the filters F1 to F5 is inclined to the optical axis in a predetermined manner to provide fibre to fibre reflection mapping as described below. The alignment of the filters F1 to F5 may be accomplished actively by monitoring the fibre outputs whilst setting each filter in angular position by means of thermosetting resin. Alternatively the filters may be held in position by means of suitable shims of calculated thickness.

The filter pass wavelengths and mapping properties are summarised in Table 1 :

(See Table 1 page 4)

Table 1

Filter properties

| FILTER | MIN PASS WAVELENGTHS | MAPPED PAIRS |
|---|---|---|
| F1 | $\lambda_a$ | 1 & 7; 2 & 6 |
| F2 | $\lambda_{a+1}$ | 1 & 3; 2 & 7 |
| F3 | $\lambda_b$ | 1 & 7; 2 & 6 |
| F4 | $\lambda_{b+1}$ | 1 & 5; 6 & 7 |
| F5 | $\lambda_n$ | 1 & 7; 2 & 6 |

The operation of this assemblage is as follows :

(i) The first filter F1 reflects signals in wavelength channels $\lambda_1$ to $\lambda_{a-1}$ from the main fibre link input port fibre 1 back through the lens B to the main fibre link output port fibre 7 ;

(ii) The second filter F2 reflects signal $S(\lambda_a)$ in wavelength channel $\lambda_a$ from the link-in fibre 1 to a third fibre 3 (the $\lambda_a$ tap-out). A corrolary of this mapping is that the second filter F2 will also reflect signals S* ($\lambda_a$) of this wavelength $\lambda_a$, from the second fibre 2 to the link-out fibre 7. In this way the signal S* ($\lambda_a$) can be lauched on the second fibre 2 and will be inserted to be combined with all other signal wavelengths on the common link-out fibre 7.

(iii) The filter F3 reflects signals in the wavelength range $\lambda_{a+1}$ to $\lambda_{b-1}$ from the first fibre, link-in fibre 1, to the link-out fibre 7.

(iv) The fourth filter F4 reflects signal S* ($\lambda_b$) to the fifth fibre, tap-out fibre 5. A similar corrolary is that this filter F4 also reflect signal S* ($\lambda_b$) of this same frequency from the sixth fibre, a tap-in fibre 6, allowing re-insertion of signal of wavelength $\lambda_b$ onto the common link-out fibre 7.

(v) The remaining filter, filter F5, reflects signals S of longer wavelengths $\lambda_{b+1}$ to $\lambda_n$ from link-in fibre 1 to the common link-out fibre 7.

In this way the device T has passed on wavelength bands from a link-in fibre 1 to a link-out fibre 7, removing signals of two wavelengths ($\lambda_a$, $\lambda_b$) in the process and allowing an option of re-inserting signals at these wavelengths, these signals carrying the original or modified data as required.

A degree of fibre symmetry is generally required so that the mapping of the reflections described in operations (ii) and (iv) above can occur. An example of this symmetry — in fact four-fold, has been shown already (fig. 4). Using six out-of-seven fibres in a 7-fibre close packed hexagonal regular array allows access to up to two wavelengths. Of these seven fibres, only six have been utilised to carry signal. The remaining fibre however is included to serve as packing and to maintain regular symmetry within the tubular housing. Other packed arrays and mirror filter combinations could be used to allow access to more than two wavelengths.

Examples of simpler assemblages may be readily seen from inspection of the accompanying drawings. For the sake of brevity some of these are listed in table 2 below :

Table 2

| FUNCTION | FIBRES USED | MIRRORS |
|---|---|---|
| Tap-in ($\lambda_a$)+Tap-out ($\lambda_a$) | 1,2,3 & 7 | F2 + F1 &/or F5 |
| Tap-in ($\lambda_b$)+Tap-out ($\lambda_b$) | 1,5,6 & 7 | F4 + F3 &/or F5 |
| Tap-in ($\lambda_a$)+Tap-out ($\lambda_b$) | 1,2,5 & 7 | F2 to F4 + F1 &/or F5 |
| Tap-in ($\lambda_b$)+Tap-out ($\lambda_a$) | 1,3,6 & 7 | F2 to F4 + F1 &/or F5 |

From inspection of table 2, it can be seen that a filter is requisite for each wavelength accessed. Link-in and Link-out fibre mapping filters are also included to reflect light as wavelengths below, above and intermediate to the access wavelengths.

Other configurations of fibres, suitable for the purposes described herein, will be apparent to those of skill in this art, and are not precluded from the scope of this invention.

To illustrate the use of the above described tapping assemblage in a wavelength-multiplexed fibre link system, the assemblage is shown in co-operative arrangement with multiplexer and demultiplexer components M and D (see figure 5). The latter components M and D may be of identical construction.

These components each comprise a fibre array and lens as shown in figures 2 and 3 preceding.

These components M and D each include a collection of wavelength selective mirror filters also arranged in wavelength sequence. These mirrors, however, are six in number, and, in distinction to the collection described herein for the assemblage, are oriented relative to the optical axis of the lens so as to map each of the peripheral fibres 1 to 6 onto the centrally located fibre 7. It is noted that it is an advantage of this system that the fibre and lens construction can be arranged to be identical for the multiplexer M, the demultiplexer D and the tapping device T of the assemblage. Futhermore, mirror filters of similar type may be adopted.

## Claims

1. A taping device for a wavelength multiplexed fibre optic system, the device comprising an array of optical fibres (A), a lens member (B) for collimating light from and/or focussing light upon an end face of the optical fibres (A), and a group of wavelength selective filters (F1-F5), wherein one of the fibres (A) provides a multiplexed link input port (1), another of the fibres provides a multiplexed link output port (7), and at least a further pair of fibres provide, respectively, an input tap (2, 6) and an output tap (3, 5), characterised in that the filters (F1-F5) are mirror filters which are arranged in wavelength sequential order and are angularly inclined for coupling light of appropriate select wavelength between said ports and taps ; in that the device further comprises, for each signal wavelength ($\lambda_a$) accessable by the device, an input tap (2) and an output tap (3), and a wavelength selective mirror filter (F2) for each accessable wavelength, each such filter being angularly inclined for coupling light between the input port (1) and the corresponding output tap (3) and between the corresponding input tap (2) and the output port (7) ; in that further filters (F1, F5) angularly inclined for coupling light between the input port (1) and the output port (7), for reflecting light at wavelengths below, above, and intermediate to said accessable wavelengths, are provided ; and in that the or each fibre pair comprising the input port (1) and the output tap (3), and the or each pair comprising the input tap (2) and the output port (7) are arranged substantially orthogonal to each other, each pair being coupled by a common mirror filter (F2).

2. A tapping device according to claim 1, wherein the lens members comprises a graded refractive index lens.

3. A tapping device according to claim 1 or 2, wherein the mirror filters comprise long wave pass filters.

4. A fibre optic tapping assemblage comprising a tapping device according to any one of claims 1 to 3, at least one signal source connected to an input tap for inserting a first signal of a predetermined wavelength, and at least one signal receiving means connected to an output tap receptive to a second signal of a predetermined wavelength, for removing said second signal from the assemblage.

5. An assemblage according to claim 4 wherein the first and second signals have a common select wavelength.

6. A wavelength multiplexed fibre optic system comprising a tapping device according to any one of claims 1 to 3 or an assemblage according to claim 4 or claim 5 in combination with at least one multiplexer and/or demultiplexer component, each incorporating a fibre array and lens member of similar construction.

## Patentansprüche

1. Anschlussvorrichtung für ein Wellenlängen mehrfachgekoppeltes Faser-optisches System, wobei die Vorrichtung eine Anordnung von optischen Fasern (A), ein Linsenteil (B) für die Kollimation von Licht von und/oder das Fokussieren von Licht auf eine (-r) End-Front von den optischen Fasern (A), und eine Gruppe von Wellenlängenselektiven Filtern (F1-F5) umfasst, worin einer der Fasern (A) ein mehrfach gekoppeltes Verbindungs-Eingabe-Tor (1), eine andere der Fasern ein mehrfachgekoppeltes Verbindungs-Ausgabe-Tor (7) bildet, und mindestens ein weiteres Paar von Fasern entsprechend einen Eingabe-Anschluss (2, 6) und einen Ausgabe-Anschluss (3, 5) bildet, dadurch gekennzeichnet, dass die Filter (F1-F5) Spiegelfilter sind, die in Wellenlängen-sequenzieller Ordnung angeordnet sind und angewinkelt geneigt sind für das Koppeln von Licht von geeignet gewählter Wellenlänge zwischen den besagten Toren und Anschlüssen ; dass die Vorrichtung weiter für jede Signalwellenlänge ($\lambda_a$) die durch die Vorrichtung zugänglich ist, einen Eingabeanschluss (2) und einen Ausgabeanschluss (3) umfasst, und einen Wellenlängen-selektiven Spiegelfilter (F2) für jede zugängliche Wellenlänge, wobei jeder derartige Filter angewinkelt geneigt für das Koppeln von Licht zwischen dem Eingabe-Tor (1) und dem entsprechenden Ausgabeanschluss (3) und zwischen dem entsprechenden Eingabeanschluss (2) und

dem Ausgabe-Tor (7) angeordnet ist ; dass weiter Filter (F1-F5) angewinkelt geneigt für das Koppeln von Licht zwischen dem Eingabe-Tor (1) und dem Ausgabe-Tor (7) angeordnet sind, um Licht bei Wellenlängen unterhalb, oberhalb und zwischenliegend zu besagten zugänglichen Wellenlängen zu reflektieren ; und dass das oder jedes Faser-Paar, welches das Eingabe-Tor (1) und den Ausgabeanschluss (3) und das oder jedes Faser-Paar, welches den Eingabeanschluss (2) und das Ausgabe-Tor (7) umfasst, im wesentlichen orthogonal zueinander angeordnet sind, wobei jedes Paar durch einen gemeinsamen Spiegelfilter (F2) gekoppelt ist.

2. Anschlussvorrichtung nach Anspruch 1, worin das Linsenteil eine abgestufte Brechungsindex-Linse umfasst.

3. Anschlussvorrichtung nach Anspruch 1 oder 2, worin die Spiegelfilter Langwellendurchgangs-Filter umfassen.

4. Faser-optische Anschlussanordnung, umfassend eine Anschlussvorrichtung nach irgendeinem der Ansprüche 1 bis 3 mindestens eine Signalquelle, verbunden an einen Eingabeanschluss für das Eingeben eines ersten Signals von vorgegebener Wellenlänge, und mindestens ein Signal-ampfangendes Mittel, verbunden an ein Ausgabeanschluss, empfänglich für ein zweites Signal von einer vorgegebenen Wellenlänge, um das besagte zweite Signal von der Anordnung aufzunehmen.

5. Anordnung nach Anspruch 4, worin erste und zweite Signale eine gemeinsame ausgewählte Wellenlänge haben.

6. Wellenlängen mehrfachgekoppeltes faseroptisches System umfassend eine Anschlussvorrichtung nach irgendeinem der Ansprüche 1 bis 3, oder eine Anordnung nach Anspruch 4 oder Anspruch 5 in Kombination mit mindestens einer Mehrfachkoppler und/oder Mehrfachentkoppler-Komponente, wobei jede eine Faseranordnung und ein Linsenteil von ähnlicher Konstruktion enthält.

## Revendications

1. Dispositif à prises destiné à un système à fibres optiques multiplexé en longueurs d'onde, le dispositif comprenant une série de fibres optiques (A), un organe à lentille (B) destiné à collimater la lumière provenant d'une face d'extrémité des fibres optiques (A) et/ou à focaliser la lumière sur une telle face d'extrémité, et un groupe de filtres (F1-F5) présentant une sélectivité en longueurs d'onde, l'une des fibres (A) formant une voie d'entrée (1) de liaison multiplexée, une autre fibre formant une voie de sortie (7) de liaison multiplexée, et une paire au moins de fibres supplémentaires formant respectivement une prise d'entrée (2, 6) et une prise de sortie (3, 5), caractérisé en ce que les filtres (F1-F5) sont des filtres réfléchissants qui sont disposés dans l'ordre successif des longueurs d'onde et sont inclinés afin qu'ils couplent la lumière de longueurs d'onde sélectionnées choisies entre les voies et les prises, en ce que le dispositif comporte, pour chaque longueur d'onde d'un signal ($\lambda_a$) accessible par le dispositif, une prise d'entrée (2) et une prise de sortie (3), et un filtre réfléchissant (F2) à sélectivité en longueurs d'onde pour chaque longueur d'onde accessible, chaque filtre étant incliné afin qu'il couple la lumière entre une voie d'entrée (1) et la prise correspondante de sortie (3) et entre la prise d'entrée correspondante (2) et la voie de sortie (7), en ce que d'autres filtres (F1, F5) inclinés de manière qu'ils couplent la lumière entre la voie d'entrée (1) et la voie de sortie (7) sont destinés à réfléchir la lumière à des longueurs d'onde inférieures aux longueurs d'onde accessibles, supérieures à ces longueurs d'onde et comprises entre ces longueurs d'onde, et en ce que la paire de fibres ou chaque paire de fibres comprenant la voie d'entrée (1) et la prise de sortie (3), et la paire ou chaque paire comprenant la prise d'entrée (2) et la voie de sortie (7) sont disposées en direction sensiblement perpendiculaire l'une à l'autre, chaque paire étant couplée par un filtre réfléchissant commun (F2).

2. Dispositif à prises selon la revendication 1, dans lequel les organes à lentille sont formés par une lentille ayant un indice de réfraction variant progressivement.

3. Dispositif à prises selon la revendication 1 ou 2, dans lequel les filtres réfléchissants sont des filtres laissant passer les grandes longueurs d'onde.

4. Ensemble à prises pour fibres optiques comprenant un dispositif à prises selon l'une quelconque des revendications 1 à 3, au moins une source de signaux connectée à une prise d'entrée et destinée à insérer un premier signal de longueur d'onde prédéterminée, et au moins un dispositif de réception de signaux connecté à une prise de sortie et destiné à recevoir un second signal à une longueur d'onde prédéterminée afin qu'il extraie le second signal de l'ensemble.

5. Ensemble selon la revendication 4, dans lequel les premier et second signaux ont une longueur d'onde choisie commune.

6. Système à fibres optiques multiplexé en longueurs d'onde, comprenant un dispositif à prises selon l'une quelconque des revendications 1 à 3 ou un ensemble selon la revendication 4 ou 5, en combinaison avec au moins un élément multiplexeur et/ou démultiplexeur, chacun comprenant une série de fibres et un organe à lentille de constructions semblables.

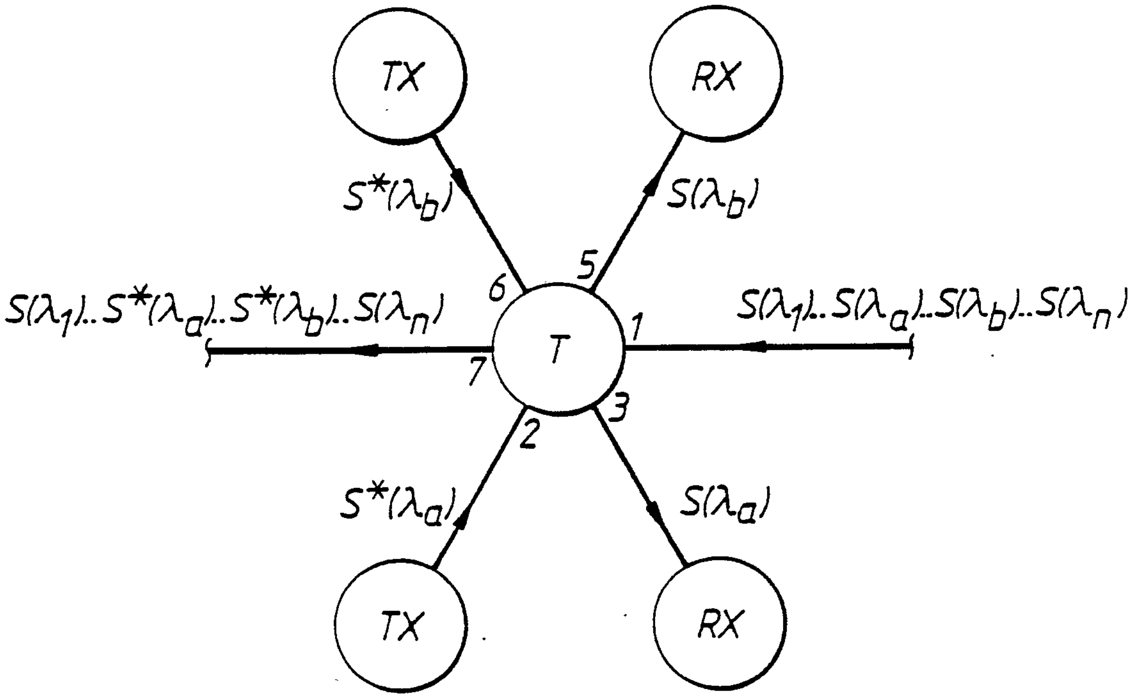
TX
RX
S*(λb)
S(λb)
6
5
S(λ1)..S*(λa)..S*(λb)..S(λn)
T
1
S(λ1)..S(λa)..S(λb)..S(λn)
7
3
2
S*(λa)
S(λa)
TX
RX

FIG. 1.

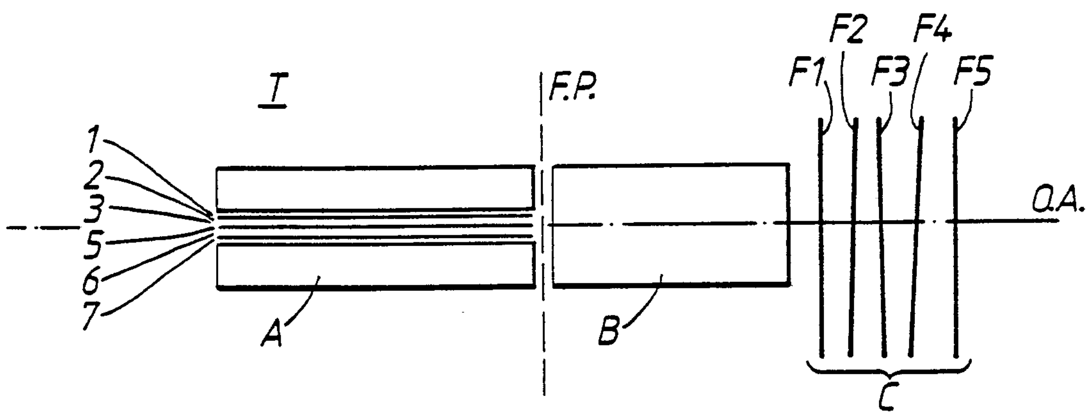
I
F.P.
F1
F2
F3
F4
F5
1
2
3
5
6
7
O.A.
A
B
C

FIG. 2.

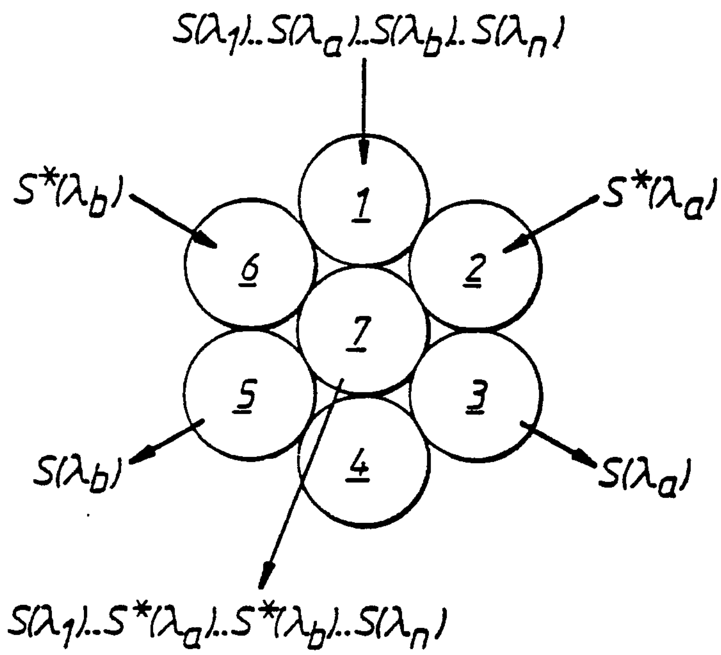


FIG. 3.

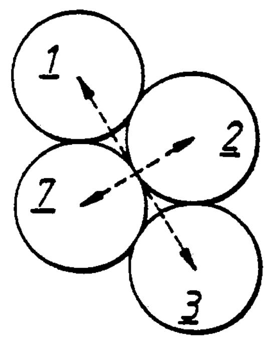


FIG. 4.

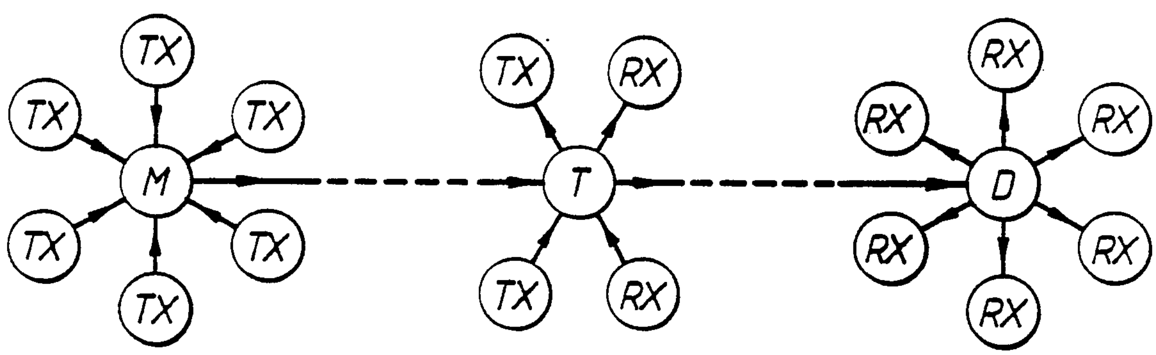


FIG. 5.